# EUROPEAN PATENT APPLICATION

(11) **EP 4 074 789 A1**
(43) Date of publication of application: **19.10.2022**
(21) Application number: 20898569.7
(22) Date of filing: 01.12.2020
(51) Int. Cl.: C09D 175/04, E04C 2/284, C04B 16/08

(54) **INSULATION MATERIAL FOR CONSTRUCTION**

(30) Priority: 12.12.2019 ES 201932042 U
(71) Applicant: Gonzalez Cotaina, Antonio Jesus, 50008 Zaragoza (ES)
(72) Inventor: Gonzalez Cotaina, Antonio Jesus, 50008 Zaragoza (ES)
(74) Representative: Schäfer, Matthias W.
(86) International application number: PCT/ES2020/070752
(87) International publication number: WO 2021/116511

(57) **Abstract**

Insulation material for construction, of the type used in floors, ceilings and walls to improve thermal and acoustic insulation, which comprises mechanically recycled polyurethane in the form of particles, one or several flame retardants and water as the binding element, all of which are mechanically mixed. Optionally latex or other bonding agents, and powdered graphite can be added.

The invention presented affords the main advantage of allowing optimal recycling of the polyurethane that is widely used in cars and in numerous industrial applications, obtaining a safe product in the event of possible fires in buildings, that allows compliance with strict building regulations, and that also provides excellent acoustic and thermal insulation.

## Description

This description relates, as its title indicates, to an insulation material for construction, of the type used in floors, ceilings and walls to improve thermal and acoustic insulation, which comprises mechanically recycled polyurethane in the form of particles, one or several flame retardants and water as the binding element, all of which are mechanically mixed. Optionally latex or other bonding agents, and powdered graphite can be added.

### Field of the invention

The invention relates to the field of insulation materials for construction and the uses of recycled polyurethane.

### Background of the invention

Polyurethane is a polymer that is compatible with most of the existing processing techniques and thus is widely used in different commercial applications such as packaging, containers, car parts, textiles, kitchenware, furniture, medicine, pipes, water heaters, refrigerators, etc.

The most common methods for recycling polyurethane are extrusion and injection although it is important to highlight that plastic materials cannot be recycled endlessly, as the pellets obtained are gradually of poorer quality. In many cases this can pose serious problems for their recycling since in the case of polyurethane foams, for example, they cannot be transformed into pellets so that their recycling is practically impossible and thus they tend to end up in landfills or incinerated. They can be subjected to chemical recycling, but this reduces their quality considerably.

The use of polyurethane as an insulation material is well known. This is evidenced, for example, in CN107400351 *"Polyurethane hard foam external wall flame-retardant heat insulation material and preparation method thereof,* CN107629186 *"Flame-retardant polyurethane foam preparation method" and* CN108191381 *"Wall body flame-retardant heat insulation material and preparation method thereof,* however, it poses the problem that it is only used in the form of a foam or paint, both of which are products that are quite contaminating, and that cannot use recycled material. Furthermore, since it is an unreacted material, that is to say, not chemically finished, when polyurethane is applied conventionally as an insulation material in the form of foam or paint, it produces emissions during its application, which may be toxic and require special safety precautions to be taken.

Mixing it with flame retardant elements is also described, in for example CN106147085 *"Thermal insulation packaging material and preparation method thereof"* and CN108409255 *"Fireproof insulation plate based on inorganic modified polyurethane particles and preparation method thereof",* but these are mixtures with a small percentage of polyurethane and, moreover, it is neither a recycled material, nor does it cover the use of calcium hydroxide as a flame retardant.

Some uses in the form of particles for insulation are also found, such as, for example, in FR2251680 *"Wall panel comprises core of plastic foam contg. mineral spheres which is abraded to expose spheres before covering is applied",* but this is not recycled material either, nor does it cover the use of calcium hydroxide nor other flame retardants.

Currently there is no known mixture such as that described, using mechanically recycled polyurethane in the form of particles, for use as an insulation material in construction.

In some applications polyurethane is combined with calcium hydroxide, but not as a flame retardant, and not with polyurethane in the form of beads.

### Description of the invention

To resolve the problem that currently exists with the recycling of polyurethane, this way improving the current state of the art, the insulation material for construction that is the object of this invention has been devised, which comprises mechanically recycled polyurethane in the form of particles, one or several flame retardants and water as the binding element, all of which are mechanically mixed. Optionally latex can be added as a second binding element, and powdered graphite, as a thermal insulation enhancer.

The flame retardant is chosen from the group formed by calcium hydroxide, hydrated alumina, triethyl phosphate, chlorinated paraffin, acrylic resins, ammonium phosphate, boric acid, boron salts, or a combination of all or some of the aforementioned. Preferably calcium hydroxide will be used.

Mechanical mixing of the components is carried out at the factory before application, for the ready-mixed product to be supplied to the construction, or, alternatively, mixing is done at the time of application, for example, by feeding all of the components into the blow-in tube.

This insulation material for construction that is described has a characteristic use for improving thermal and acoustic insulation of walls, ceilings, and floors. It can be applied in different ways: by blowing in to fill wall cavities, by spraying to cover the surface of walls, floors, and ceilings, by pouring over flat horizontal surfaces, or by means of shaped bags filled with the insulation material.

### Advantages of the invention

This insulation material for construction that is presented affords numerous advantages over those currently available, the most important of these being that it allows optimal recycling of the polyurethane that is widely used in cars and in many industrial applications.

It is important to note that thanks to the water and, optionally the latex, the flame retardant product covers all the recycled polyurethane particles, providing them with a flame retardant effect.

Another important advantage thanks to the incorporation of the flame retardant, is its characteristic of being a safe product in the event of possible fires in buildings, allowing it to comply with strict building regulations.

Another advantage of this invention is the excellent acoustic and thermal insulation obtained thanks to its application in the form of particles.

Also noteworthy is that it is possible to improve its thermal insulation capacity even further by adding powdered graphite.

Another of the most important advantages to be mentioned is that it can be used with different means of application: by blowing in, to fill wall cavities, by spraying to cover the surface of walls, floors and ceilings, by pouring on to flat horizontal surfaces, or by means of shaped bags filled with the insulation material, meaning that it is easily applicable to improve the thermal and acoustic insulation of walls, ceilings and floors.

Another advantage to be highlighted is that, as it is an already reacted material, that is, chemically finished, it does not produce emissions when applied unlike in the conventional application of polyurethane as an insulation material in the form of a foam or paint.

Furthermore, an additional advantage is that it is simple and economical to manufacture as it does not require costly facilities or machinery.

### Preferred embodiment of the invention

The constitution and characteristics of the invention may be better understood from the following description, in which the insulation material for construction comprises:
- mechanically recycled polyurethane in the form of particles, with a size of between 0.1 mm and 20 mm diameter, in a proportion of between 80% and 90% by weight in respect to the total weight,
- one or several flame retardants in a proportion of between 3% and 6% by weight with respect to the total weight, and
- water, as the binding element, in a proportion of between 5% and 10% by weight with respect to the total weight,
all of which are mechanically mixed.

The flame retardants are chosen from the group formed by calcium hydroxide, hydrated alumina, triethyl phosphate, chlorinated paraffin, acrylic resins, ammonium phosphate, boric acid, boron salts, or a combination of all or some of the aforementioned. Preferably calcium hydroxide will be used.

An alternative embodiment is envisaged in which latex, or another bonding element is also added, as a second binding element in a proportion of between 2% and 4% by weight with respect to the total weight.

Another alternative embodiment is also envisaged in which powdered graphite is also added as an enhancer of the thermal insulation, in a proportion of between 1.5% and 3% by weight with respect to the total weight.

The flame retardant or flame retardants are pre-dissolved in water before mechanical mixing, although alternatively the flame retardant or flame retardants and the water can be added to the mixture separately.

Mechanical mixing of the components is carried out at the factory before application, for the ready-mixed product to be supplied to the construction, or, alternatively, mixing is done at the time of application, for example, by feeding all of the components into the blow-in tube.

This insulation material for construction that is described has a characteristic use for improving thermal and acoustic insulation of walls, ceilings, and floors. It can be applied in different ways. One of them is by blowing in, to fill wall cavities. Blowing in consists of inserting the insulation material, by mechanical or pneumatic methods, inside the wall cavity of dwelling facades. It is what is known as "blown-in insulation". For this purpose, a hole is first made in the façade wall cavity, a tube is inserted through which the insulation material is inserted between the façade of the building and the inner leaf, filling the cavity that exists there. To drive the insulation material through the tube a pneumatic (air current) or mechanical (auger) driver is used. Once the wall cavity has been filled the hole made is closed.

Another possible application is by spraying to cover the surface of walls, floors, and ceilings. It is also possible to pour it over flat horizontal surfaces. In this case it is advisable to increase the latex or other bonding agent content.

Another possibility is to apply it in shaped bags, made of paper, plastic or aluminium, filled with the insulation material, either at the factory or at the construction itself.

A person skilled in the art will easily comprehend that the characteristics of different embodiments can be combined with the characteristics of other possible embodiments, provided that the combination is technically possible.

All of the information referring to examples or embodiments form part of the description of the invention.

## Claims

1. - Insulation material for construction, of the type used in floors, ceilings and walls to improve thermal and acoustic insulation, **characterised in that** it comprises
- mechanically recycled polyurethane in the form of particles, in a proportion of between 80% and 90% by weight in respect to the total weight,
- one or several flame retardants in a proportion of between 3% and 6% by weight with respect to the total weight, and
- water, as the binding element, in a proportion of between 5% and 10% by weight with respect to the total weight,
all of which are mechanically mixed

2. - Insulation material for construction, according to the preceding claim, **wherein** the flame retardant or flame retardants are chosen from the group formed by calcium hydroxide, hydrated alumina, triethyl phosphate, chlorinated paraffin, acrylic resins, ammonium phosphate, boric acid, boron salts, or a combination of all or some of the aforementioned.

3. - Insulation material for construction, according to either of the preceding claims, **wherein** it also comprises latex, as a second binding element, in a proportion of between 2% and 4% by weight with respect to the total weight.

4. - Insulation material for construction, according to any of the preceding claims, **wherein** it also comprises powdered graphite as a thermal insulation enhancer, in a proportion of between 1.5% and 3% by weight with respect to the total weight.

5. - Insulation material for construction, according to any of the preceding claims, **wherein** the size of the recycled polyurethane particles is between 0.1 mm and 20 mm diameter.

6. - Insulation material for construction, according to any of the preceding claims, **wherein** the flame retardant or flame retardants are pre-dissolved in water before mechanical mixing.

7. - Insulation material for construction, according to any of the preceding claims, **wherein** the mechanical mixing of the components is carried out before its application.

8. - Insulation material for construction, according to any of the preceding claims 1 to 6 , **wherein** the mechanical mixing of the components is carried out at the time of its application.

9. - Use of an insulation material for construction, as described in the preceding claims, **wherein** its application is in walls, floors and ceilings.

10. - Use of an insulation material for construction, according to claim 9, **wherein** its application in walls is carried out by blowing in, to fill the wall cavities of the said walls.

11. - Use of an insulation material for construction, according to claim 9, **wherein** its application is carried out by spraying, to cover the surfaces of walls, floors and ceilings.

12. - Use of an insulation material for construction, according to claim 9, **wherein** its application on flat horizontal surfaces is carried out by pouring.

13. - Use of an insulation material for construction, according to claim 9, **wherein** its application is carried out in shaped, filled bags.
